# EUROPÄISCHE PATENTSCHRIFT

(11) **EP 2 379 314 B1**
(45) Veröffentlichungstag und Bekanntmachung des Hinweises auf die Patenterteilung: **10.12.2014**
(21) Anmeldenummer: 09736218.0
(22) Anmeldetag: 15.10.2009
(51) Int. Cl.: B29D 29/08, F16G 1/28

(54) **ZAHNRIEMEN ZUM ANTRIEB EINER NOCKENWELLE IN HOCHLEISTUNGSMOTOREN**
TOOTHED BELT FOR DRIVING A CAMSHAFT IN HIGH-PERFORMANCE ENGINES
COURROIE CRANTÉE POUR L'ENTRAÎNEMENT D'UN ARBRE À CAMES POUR MOTEURS À GRANDE PUISSANCE

(30) Priorität: 16.12.2008 DE 102008055530
(43) Veröffentlichungstag der Anmeldung: 26.10.2011
(73) Patentinhaber: ContiTech Antriebssysteme GmbH, 30165 Hannover (DE)
(72) Erfinder: WELL, Michael, 38159 Vechelde (DE); TEVES, Reinhard, 30926 Seelze (DE); SCHULTE, Hermann, 30823 Garbsen (DE); UNRUH, Axel, 30655 Hannover (DE); BALTES, Thomas, 30177 Hannover (DE); OBERT, Markus, 30457 Hannover (DE); SCHEMEIT, Jens-Peter, 31228 Peine (DE)
(74) Vertreter: Finger, Karsten
(86) Internationale Anmeldenummer: PCT/EP2009/063471
(87) Internationale Veröffentlichungsnummer: WO 2010/069630

(56) Entgegenhaltungen:
- WO-A1-00/29762
- WO-A1-2004/015300
- WO-A1-2005/080820
- WO-A1-2007/117690
- DE-A1- 10 204 092
- DE-A1-102006 018 717
- DE-A1-102006 056 716

## Beschreibung

Die Erfindung betrifft einen Zahnriemen zum Antrieb einer Nockenwelle in Hochleistungsmotoren mit einem Grundkörper aus einer vulkanisierten Kautschukmischung (Vulkanisat), enthaltend eine Kautschukkomponente oder einen Kautschukkomponentenverschnitt sowie Mischungsingredienzien, wobei der Grundkörper eine Decklage als Riemenrücken, einen eingebetteten Festigkeitsträger und einen Unterbau mit einer zahnförmigen Kraftübertragungszone umfasst.

Hinsichtlich des Standes der Technik von Zahnriemen wird insbesondere auf folgende Patentliteratur verwiesen.

| | |
|---|---|
| EP 0 599 145 B1 | EP 1 129 308 B1 |
| EP 0 737 228 B1 | WO 2005/080821 A1 |
| EP 0 866 834 B1 | WO 2006/066669 A1 |
| EP 1 088 177 B1 | US 5 417 618 |

In der Offenlegungsschrift WO 2005/080821 A1, die hier als nächstliegender Stand der Technik anzusehen ist, wird eine vulkanisierte Kautschukmischung auf der Basis eines Copolymeren aus Butadien und Acrylnitril vorgestellt. Ein derartiges Copolymer ist auch unter der Bezeichnung Nitrilkautschuk (NBR) bekannt. Von besonderer Bedeutung ist dabei der (teil)hydrierte Nitrilkautschuk (HNBR). Antriebsriemen, welche HNBR-Kautschuk enthalten können, sind bspw. aus De 10 2006 018717 A1 bekannt. Nach dieser hier zitierten Lehre beträgt in Bezug auf das Gesamtgewicht des Copolymeren der Anteil an Acrylnitril (ACN-Gehalt) 33 bis 49 Gew.-%. Für eine optimale Ölbeständigkeit ist man bislang davon ausgegangen, dass ein ACN-Gehalt von > 33 Gew.-% erforderlich ist.

Nachteile ergeben sich bei einem hohen ACN-Gehalt jedoch hinsichtlich der Kälteflexibilität. So haben beispielsweise Zahnriemen aus HNBR mit einem ACN-Gehalt von > 33 Gew.-% eine untere Einsatztemperatur von - 25 °C. Bei tieferen Temperaturen kommt es zu Rissen und der Antriebsriemen fällt aus. Hinzu kommt, dass das Werkstoffkonzept auf Basis NBR, insbesondere HNBR, kostenintensiv ist.

Im Rahmen einer Weiterentwicklung besteht die Aufgabe der Erfindung darin, einen Zahnriemen zum Antrieb einer Nockenwelle in Hochleistungsmotoren bereitzustellen, der sich zumindest unter teilweisem, insbesondere vollständigem Verzicht von NBR und HNBR durch eine verbesserte Tieftemperaturflexibiltät und höherer Lebensdauer bei zumindest bei gleicher oder insbesondere besserer Kraftübertragung auszeichnet.

Gelöst wird diese Aufgabe dadurch, dass die Kautschukmischung als Kautschukkomponente/n zumindest ein Ethylen-Propylen-Mischpolymerisat (EPM) oder zumindest ein Ethylen-Propylen-Dien-Mischpolymerisat (EPDM) sowie ferner Fasern enthält, wobei die Fasern aus Polyvinylalkohol (PVA), Aramid, Baumwolle, Cellulose, Kohle oder Glas bestehen..

Das EPM und EPDM sind nach einer Alternative jeweils unverschnitten. Nach einer weiteren Alternative kann EPM oder EPDM mit wenigstens einer weiteren Kautschukkomponente, die im Hintergrund der Aufgabenstellung insbesondere nicht NBR oder HNBR ist, einen Verschnitt bilden, wobei dann ein EPM/EPDM-Verschnitt bevorzugt ist.

Die vulkanisierte Kautschukmischung enthält neben der/den Kautschukkomponente/n noch Mischungsingredienzien. Die Mischungsingredienzien umfassen wenigstens einen Vernetzer oder Vernetzersystem (Vernetzungsmittel und Beschleuniger), wobei hier die peroxidische Vernetzung im, Vordergrund steht. Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe (z.B. Farbpigmente, Harze). Diesbezüglich wird auf den allgemeinen Stand der Kautschukmischungstechnologie verwiesen.

Von erfindungswesentlicher Bedeutung ist, dass der Kautschukmischung Fasern beigemischt sind, wobei die Fasern aus Polyvinylalkohol (PVA), Aramid, Baumwolle, Cellulose, Kohle oder Glas bestehen. Von besonderer Bedeutung sind Fasern aus PVA und Aramid, insbesondere in Form von para-Aramid. Die Fasern sind bevorzugt Kurzfasern mit einer Faserlänge von 1 bis 5 mm, insbesondere von 3 bis 4 mm. Der Mengenanteil an Fasern beträgt 5 bis 20 phr, insbesondere wiederum 5 bis 15 phr. Die Fasern sind innerhalb der Kautschukmischung gleichmäßig verteilt.
Die Kombination aus orientierten Polyesterfasern und orientierten Aramidfasern für die Haltbarkeit von Keilriemen bzw. Keilrippenriemen wird bspw. in WO 2004/015300 A1 diskutiert.

Vorteilhafterweise sind die Fasern haftfreundlich präpariert und/oder ein Haftmittel ist der Kautschukmischung beigemischt. Nach einem Ausführungsbeispiel sind die Fasern mit einem Haftsystem auf der Basis eines Resorcin-Formaldehyd-Harzes, insbesondere eines Resorcin-Melamin-Harzes, beschichtet. Unbeschichtete Fasern ergeben geringere Haftwerte.

Im Rahmen einer Versuchsdurchführung werden nun drei Zahnriemenmischung I bis III miteinander verglichen, wobei die Tabelle 1 die Zusammensetzungen der jeweils peroxidisch vernetzten Mischungen in phr (per hundred rubber) unter Angabe von vorteilhaften Alternativen und die Tabellen 2 und 3 die Ergebnisse festhalten:

**Tabelle 1**

| **Mischungsbestandteile** | **I** | **II** | **III** |
|---|---|---|---|
| EPM (a) oder EPDM (b) | 100 | 100 | 30 |
| HNBR (c) | - | - | 70 |
| Ruß (d) | 25 | 25 | 25 |
| Kurzfasern (e) | 8 | - | 8 |
| Kieselsäure (f) | 15 | 15 | 15 |
| Sorbinsäure | 15 | 15 | 15 |
| Stearinsäure | 1 | 1 | 1 |
| Weichmacher (g) | 8 | 8 | 8 |
| Zinkoxid | 10 | 10 | 10 |
| Alterungsschutzmittel (h) | 2,5 | 2,5 | 2,5 |
| Peroxid (i) | 7,5 | 7,5 | 7,5 |

| | | | |
|---|---|---|---|
| (a) ReEPM: Keltan 740® von DSM (b) EPDM: BUNA EP G 6850® von Lanxess (c) HNBR: 34 % ACN-Gehalt, 4 % Restdoppelbindungsgehalt (Therban C3446® von Lanxess) (d) Rußtypen: N 550, SAF, ISAF, HAF, FEF oder GPF (e) Kurzfasern: PVA (4 mm), beispielsweise Kuralon® oder Mewlon® oder Kurzfasern: para-Aramid (3 mm), beispielsweise Twaron® oder Technora® (f) Hochdisperse Kieselsäure VN 3 (g) Ester der Trimellitsäure (h) Zinksalz von Methylmercaptobenzimidazol (i) Di(tert-butylperoxyisopropyl)benzol | | | |

**Tabelle 2**

| **Kriterien** | **Angaben in** | **I** | **II** | **III** |
|---|---|---|---|---|
| **20 min, 180 °C Heizzeit Prüfung 23 °C** | | | | |
| Härte | Shore A | 83 | 81 | 84 |
| Festigkeit (1*) | MPa | 17,3 | 17,9 | 19,4 |
| Festigkeit (q**) | MPa | 15,7 | 17,8 | 17,0 |
| Dehnung (1) | % | 35 | 196 | 87 |
| Dehnung (q) | % | 240 | 196 | 267 |
| Spannungswert (10 %) (1) | MPa | 9,1 | 1,8 | 9,5 |
| Spannungswert (10 %) (q) | MPa | 2,0 | 1,8 | 2,1 |
| Spannungswert (100 %) (l) | MPa | - | 8,1 | - |
| Spannungswert (100 %) (q) | MPa | 10,3 | 8,0 | 7,6 |
| Weiterreißfestigkeit (1) | N/mm | 8,34 | 3,68 | 10,45 |
| Weiterreißfestigkeit (q) | N/mm | 7,74 | 2,92 | 10,42 |

| **Prüfung bei 100 °C** | | | | |
|---|---|---|---|---|
| Weiterreißfestigkeit (1) | N/mm | 3,10 | 1,10 | 3,47 |
| Weiterreißfestigkeit (q) | N/mm | 3,77 | 1,18 | 3,57 |

| | | | | |
|---|---|---|---|---|
| * längs ** quer | | | | |

Den Ergebnissen der Tabelle 2 lagen folgende Prüfvorschriften zugrunde:
Härte: DIN 53504
Festigkeit, Dehnung, Spannungswert: DIN 53504, DIN 53455, DIN 53571 Weiterreißfestigkeit: DIN 53507

**Tabelle 3**

| **Kriterien** | **Angaben in** | **I** | **II** | **III** |
|---|---|---|---|---|
| Laufzeit 150 °C | h | 110 | 12 | 43 |
| Kältetest | °C | -45 | -45 | -32 |

Den Ergebnissen der Tabelle 3 lagen folgen Prüfvorschriften zugrunde:
Laufzeittest bei 150 °C: Interner 5-Scheibenprüfstand des Anmelders
Kältetest: Interner Kälteprüfstand des Anmelders, Abbruch bei Auftreten von Rissen in der Decklage

In Bezug auf die Zahnriemenmischung gemäß WO2005/080821 A1 wurden bei der Zahnriemenmischung III 30 phr HNBR durch EPM oder EPDM ersetzt, wobei zusätzlich eine Faserverstärkung vorgenommen wurde. Durch die Beimischung von EPM oder EPDM tritt bereits im Rahmen des Kältetestes ein verbessertes Eigenschaftsniveau auf. Eine noch deutlichere Verbesserung im Hinblick auf die Kälteflexibilität tritt bei den Zahnriemenmischungen I und II auf, die als Kautschukkomponente ausschließlich EPM oder EPDM enthalten. Zwecks Erfüllung einer erhöhten Lebensdauer ist es jedoch von wesentlicher Bedeutung, dass der Zahnriemenmischung Fasern aus Polyvinylalkohol (PVA), Aramid, Baumwolle, Cellulose, Kohle oder Glas beigemischt werden, was der Vergleichsversuch der Zahnriemenmischung I und II anhand der Ergebnisse der Tabellen 2 und 3 verdeutlicht.

Im Rahmen einer weiteren Versuchsdurchführung werden nun zwei Zahnriemenmischungen IV und V auf der Basis EPM oder EPDM miteinander verglichen, die beide faserverstärkt sind. Bei der Mischung IV kommt jedoch im Gegensatz zu der Mischung V noch ein Haftsystem für die Fasern zum Einsatz. Die Zusammensetzungen der beiden ebenfalls peroxidisch vernetzten Mischungen in phr sind in der Tabelle 4 zusammengetragen, während die Tabelle 5 die diesbezüglichen Ergebnisse festhält.

**Tabelle 4**

| **Kriterien** | **IV** | **V** |
|---|---|---|
| EPM oder EPDM | 100 | 100 |
| Russ | 30 | 30 |
| Kurzfasern | 6 | 6 |
| Kieselsäure | 15 | 15 |
| Sorbinsäure | 15 | 15 |
| Stearinsäure | 1 | 1 |
| Weichmacher | 8 | 8 |
| Zinkoxid | 10 | 10 |
| Alterungsschutz | 2,5 | 2,5 |
| Cohedur RK (j) | 5 | - |
| HMMM (k) | 3,5 | - |
| Peroxid | 7 | 7 |

| | | |
|---|---|---|
| (i) Resorcinol Derivat von Lanxess (j) Hexa(methoxmethyl)melaminether, beispielsweise Resimene XT 922 | | |

Hinsichtlich der anderen Mischungsbestandteile wird auf die Erläuterungen zu der Tabelle 1 verwiesen.

**Tabelle 5**

| **Kriterien** | **Angaben in** | **IV** | **V** |
|---|---|---|---|
| **20 min, 180 °C Heizzeit Prüfung 23 °C** | | | |
| Härte | Shore A | 88 | 83 |
| Festigkeit (1*) | MPa | 14,1 | 13,0 |
| Festigkeit (q*) | MPa | 12,6 | 12,0 |
| Dehnung (1) | % | 135 | 188 |
| Dehnung (q) | % | 195 | 206 |
| Spannungswert (10 %) (1) | MPa | 4,9 | 4,0 |
| Spannungswert (10 %) (q) | MPa | 1,9 | 1,4 |
| Spannungswert (100 %) (1) | MPa | 10,1 | 8,2 |
| Spannungswert (100 %) (q) | MPa | 7,4 | 6,9 |
| Weiterreißfestigkeit (1) | N/mm | 9,05 | 7,83 |
| Weiterreißfestigkeit (q) | N/mm | 9,82 | 8,11 |

| **Prüfung bei 100 °C** | | | |
|---|---|---|---|
| Weiterreißfestigkeit (1) | N/mm | 3,07 | 2,10 |
| Weiterreißfestigkeit (q) | N/mm | 3,12 | 2,24 |

| | | | |
|---|---|---|---|
| * längs ** quer | | | |

Hinsichtlich der Prüfvorschriften wird auf die Erläuterungen zu der Tabelle 2 verwiesen.

Die Tabelle 5 verdeutlicht, dass der Einsatz eines Haftsystems auf der Basis eines Resorcin-Melamin-Harzes, das auch die Bedeutung eines Verstärkungsharzes hat, vorteilhaft ist. Die Mischung IV zeigt höhere Festigkeiten und Spannungswerte als die Mischung V ohne das Harzsystem. Besonders die Weiterreißfestigkeit, die zur Lebensdauererhöhung beiträgt, wird signifikant verbessert.

Die Erfindung wird nun anhand von Ausführungsbeispielen unter Bezugnahme auf schematische Zeichnungen erläutert. Es zeigen:
- Fig. 1: eine dreidimensionale Darstellung eines Zahnriemens mit Draufsicht auf die Kraftübertragungszone, die mit einer Beschichtung ausgestattet ist;
- Fig. 2: einen Längsschnitt durch einen Zahnriemen mit einer Beschichtung für die Kraftübertragungszone und für die Decklage.

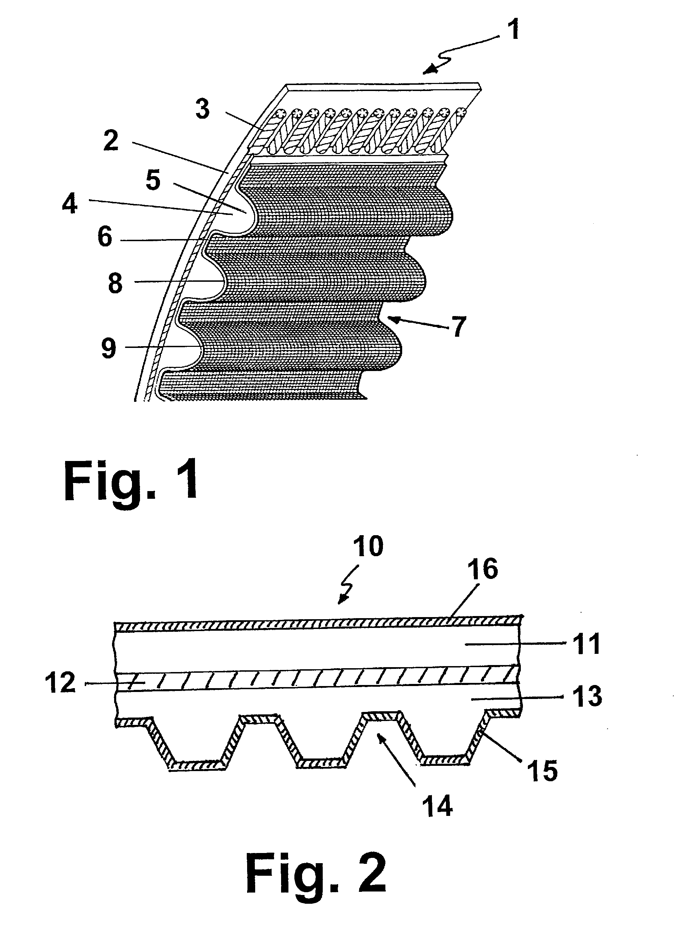

Fig. 1 zeigt einen Zahnriemen mit einer Decklage 2 als Riemenrücken, einem eingebetteten Festigkeitsträger 3 sowie mit einem Unterbau 4. Der Festigkeitsträger besteht aus mehreren Zugsträngen, die nebeneinander angeordnet eine Festigkeitsträgerlage bilden, und zwar hier im Rahmen einer einlagigen Ausführung. Der Zugstrang, insbesondere in Form von Corden, kann aus Polyamid (PA), Aramid, Polyester, Glas (z.B. E- oder K-Glas), Kohle, Polyetheretherketon (PEEK) oder Polyethylen-2,6-naphthalat (PEN) bestehen.

Die Decklage (2) und der Unterbau (4) bilden als Gesamteinheit den elastischen Grundkörper, der vorteilhafterweise aus einem Vulkanisat auf Basis von unverschnittenem EPM oder ebenfalls unverschnittenem EPDM oder eines EPM/EPD-Verschnittes besteht. In das Vulkanisat sind die bereits näher vorgestellten Fasern aus Polyvinylalkohol (PVA), Aramid, Baumwolle, Cellulose, Kohle oder Glas eingemischt, insbesondere unter Mitwirkung eines Haftsystems.

Der Unterbau 4 ist mit einer zahnförmigen Profilierung, umfassend Zähne 5 und Zahnstege 6, versehen und bildet die Kraftübertragungszone 7, die besonders verschleißanfällig ist durch Abrieb und den Einfluss von Ölen. Aus diesem Grunde ist die Kraftübertragungszone mit einer abriebfesten Beschichtung 8 in Form einer Textilauflage ausgestattet. Die Textilauflage besteht aus einem Gewebe, Gewirke oder Gestrick, wobei bei Zahnriemen die Gewebevariante von besonderer Bedeutung ist. Die Textilauflage wiederum besteht aus Polyamid (PA) und/oder Polyester und/oder Baumwolle und/oder Aramid und/oder Polyetheretherketon (PEEK). Die Textilauflage ist vorzugsweise zusätzlich mit einem gleitfähigen und ölbeständigen Kunststoff getränkt und/oder oberflächenbeschichtet (Außenschicht 9). Der Kunststoff ist zumeist ein fluorhaltiger Kunststoff und/oder ein Silicon und/oder ein Polyurethan (PU). Der fluorhaltige Kunststoff ist insbesondere Polyvinylfluorid (PVF) und/oder Polyvinylidenfluorid (PVDF) und/oder Polytetrafluorethylen (PTFE). Von besonderer Bedeutung ist PTFE. Die beiden Teilschichten 8 und 9 mit unterschiedlicher Funktion treten hier als gemeinsame Schutzschicht auf. Die Decklage 2 ist bei dem Ausführungsbeispiel gemäß Fig. 1 frei von einer schützenden Beschichtung.

Der Zahnriemen nach Fig. 2 umfasst eine Decklage 11 als Riemenrücken, einen eingebetteten Festigkeitsträger 12 in Form von Zugsträngen und einen Unterbau 13 mit einer zahnförmigen Kraftübertragungszone 14. Bei diesem Ausführungsbeispiel ist sowohl die Decklage 11 als auch die Kraftübertragungszone mit einer Beschichtung 15 bzw. 16 ausgestattet. Die beiden Beschichtungen umfassen jeweils eine Textilauflage, insbesondere in Form eines Gewebes, die wiederum vorzugsweise zusätzlich mit einem gleitfähigen und ölbeständigen Kunststoff getränkt und/oder oberflächenbeschichtet sind. Hinsichtlich Werkstoffdetails von Textilauflage und Kunststoff wird auf die Beschreibung gemäß Fig. 1 verwiesen.

### Bezugszeichenliste

### (Teil der Beschreibung)

- 1: Zahnriemen
- 2: Decklage als Riemenrücken
- 3: Festigkeitsträger in Form von Zugsträngen
- 4: Unterbau
- 5: Zahn
- 6: Zahnsteg
- 7: Kraftübertragungszone
- 8: Beschichtung in Form einer Textilauflage
- 9: Außenschicht aus Kunststoff
- 10: Zahnriemen
- 11: Decklage als Riemenrücken
- 12: Festigkeitsträger in Form von Zugsträngen
- 13: Unterbau
- 14: Kraftübertragungszone
- 15: Beschichtung in Form einer Textilauflage
- 16: Beschichtung in Form einer Textilauflage

## Patentansprüche

1. Zahnriemen (1, 10) zum Antrieb einer Nockenwelle in Hochleistungsmotoren mit einem Grundkörper aus einer vulkanisierten Kautschukmischung, enthaltend eine Kautschukkomponente oder einen Kautschukkomponentenverschnitt sowie Mischungsingredienzien, wobei der Grundkörper eine Decklage (2, 11) als Riemenrücken, einen eingebetteten Festigkeitsträger (3, 12) und einen Unterbau (4, 13) mit einer zahnförmigen Kraftübertragungszone (7, 14) umfasst, **dadurch gekennzeichnet, dass** die Kautschukmischung als Kautschukkomponente/n zumindest ein Ethylen-Propylen-Mischpolymerisat (EPM) oder zumindest ein Ethylen-Propylen-Dien-Mischpolymerisat (EPDM) sowie ferner Fasern enthält, wobei die Fasern aus Polyvinylalkohol (PVA), Aramid, Baumwolle, Cellulose, Kohle oder Glas bestehen..

2. Zahnriemen nach Anspruch 1, **dadurch gekennzeichnet, dass** das EPM und EPDM jeweils unverschnitten sind.

3. Zahnriemen nach Anspruch 1, **dadurch gekennzeichnet, dass** das EPM oder EPDM mit wenigstens einer weiteren Kautschukkomponente einen Verschnitt bildet.

4. Zahnriemen nach einem der Ansprüche 1 bis 3, **dadurch gekennzeichnet, dass** die Kautschukmischung peroxidisch vernetzt ist.

5. Zahnriemen nach einem der Ansprüche 1 bis 4, **dadurch gekennzeichnet, dass** die Fasern Kurzfasern sind.

6. Zahnriemen nach Anspruch 5, **dadurch gekennzeichnet, dass** die Faserlänge 1 bis 5 mm beträgt.

7. Zahnriemen nach einem der Ansprüche 1 bis 6, **dadurch gekennzeichnet, dass** der Mengenanteil an Fasern 5 bis 20 phr beträgt.

8. Zahnriemen nach einem der Ansprüche 1 bis 7, **dadurch gekennzeichnet, dass** die Fasern haftfreundlich präpariert sind und/oder der Kautschukmischung ein Haftmittel beigemischt ist.

9. Zahnriemen nach einem der Ansprüche 1 bis 8, **dadurch gekennzeichnet, dass** der Festigkeitsträger (3, 12) aus zwei oder mehreren Zugsträngen besteht, die nebeneinander angeordnet eine Festigkeitsträgerlage bilden, die ein- oder mehrlagig ausgeführt ist.

10. Zahnriemen nach Anspruch 9, **dadurch gekennzeichnet, dass** der Zugstrang (3, 12) aus Polyamid (PA), Aramid, Polyester, Glas, Kohle, Polyetheretherketon (PEEK) oder Polyethylen-2,6-naphthalat (PEN) besteht.

11. Zahnriemen nach einem der Ansprüche 1 bis 10, **dadurch gekennzeichnet, dass** wenigstens die Kraftübertragungszone (7, 14) mit einer abriebfesten Beschichtung (8, 15) versehen ist.

12. Zahnriemen nach Anspruch 11, **dadurch gekennzeichnet, dass** die Kraftübertragungszone (7, 14) und die Decklage (11) jeweils mit einer abriebfesten Beschichtung (8, 15, 16) versehen sind.

13. Zahnriemen nach Anspruch 11 oder 12, **dadurch gekennzeichnet, dass** die abriebfeste Beschichtung (8, 15, 16) eine Textilauflage umfasst.

14. Zahnriemen nach Anspruch 13, **dadurch gekennzeichnet, dass** die Textilauflage (8, 15, 16) aus einem Gewebe, Gewirke oder Gestrick besteht.

15. Zahnriemen nach Anspruch 13 oder 14, **dadurch gekennzeichnet, dass** die Textilauflage (8, 15, 16) aus Polyamid (PA) und/oder Polyester und/oder Baumwolle und/oder Aramid und/oder Polyetheretherketon (PEEK) und/oder Polyimid (PI) besteht.

16. Zahnriemen nach einem der Ansprüche 13 bis 15, **dadurch gekennzeichnet, dass** die Textilauflage (8, 15, 16) zusätzlich mit einem gleitfähigen und/oder ölbeständigen Kunststoff getränkt und/oder oberflächenbeschichtet ist.

17. Zahnriemen nach Anspruch 16, **dadurch gekennzeichnet, dass** der Kunststoff ein fluorhaltiger Kunststoff und/oder ein Silicon und/oder ein Polyurethan (PU) ist.

18. Zahnriemen nach Anspruch 17, **dadurch gekennzeichnet, dass** der fluorhaltige Kunststoff Polyvinylfluorid (PVF) und/oder Polyvinylidenfluorid (PVDF) und/oder Polytetrafluorethylen (PTFE) ist.

## Claims

1. Toothed belt (1, 10) for driving a camshaft in high-performance engines, having a foundational body composed of a vulcanized rubber mixture containing a rubber component or a rubber component blend and also mixture ingredients, wherein the foundational body comprises a top ply (2, 11) as belt backing, an embedded strength element (3, 12) and a substructure (4, 13) having a tooth-shaped force-transmission zone (7, 14), **characterized in that** the rubber mixture contains at least one ethylene-propylene copolymer (EPM) or at least one ethylene-propylene-diene monomer copolymer (EPDM) as rubber component/s and also fibers, wherein the fibers consist of polyvinyl alcohol (PVA), aramid, cotton, cellulose, carbon or glass.

2. Toothed belt according to Claim 1, **characterized in that** the EPM and EPDM are each uncut.

3. Toothed belt according to Claim 1, **characterized in that** the EPM or EPDM forms a blend with at least one further rubber component.

4. Toothed belt according to any one of Claims 1 to 3, **characterized in that** the rubber mixture is peroxidically crosslinked.

5. Toothed belt according to any one of Claims 1 to 4, **characterized in that** the fibers are short fibers.

6. Toothed belt according to Claim 5, **characterized in that** the fiber length is in the range from 1 to 5 mm.

7. Toothed belt according to any one of Claims 1 to 6, **characterized in that** the proportion of fibers is in the range from 5 to 20 phr.

8. Toothed belt according to any one of Claims 1 to 7, **characterized in that** the fibers have an adhesion-friendly finish and/or an adhesion promoter is admixed to the rubber mixture.

9. Toothed belt according to any one of Claims 1 to 8, **characterized in that** the strength element (3, 12) consists of two or more tensile strands arranged side by side to form a strength element ply which is single or multi plied.

10. Toothed belt according to Claim 9, **characterized in that** the tensile strand (3, 12) consists of polyamide (PA), aramid, polyester, glass, carbon, polyetheretherketone (PEEK) or poly(ethylene 2,6-naphthalate) (PEN).

11. Toothed belt according to any one of Claims 1 to 10, **characterized in that** at least the force transmission zone (7, 14) bears an abrasion-resistant coating (8, 15).

12. Toothed belt according to Claim 11, **characterized in that** the force transmission zone (7, 14) and the top ply (11) each bear an abrasion-resistant coating (8, 15, 16).

13. Toothed belt according to Claim 11 or 12, **characterized in that** the abrasion-resistant coating (8, 15, 16) comprises a textile cover ply.

14. Toothed belt according to Claim 13, **characterized in that** the textile cover ply (8, 15, 16) consists of a woven fabric, a formed-loop knit fabric or a drawn-loop knit fabric.

15. Toothed belt according to Claim 13 or 14, **characterized in that** the textile cover ply (8, 15, 16) consists of polyamide (PA) and/or polyester and/or cotton and/or aramid and/or polyetheretherketone (PEEK) and/or polyimide (PI).

16. Toothed belt according to any one of Claims 13 to 15, **characterized in that** the textile cover ply (8, 15, 16) is additionally surface coated or/and saturated with a lubricious and/or oil-resistant plastic.

17. Toothed belt according to Claim 16, **characterized in that** the plastic is a fluorinated plastic and/or a silicone and/or a polyurethane (PU).

18. Toothed belt according to Claim 17, **characterized in that** the fluorinated plastic is polyvinyl fluoride (PVF) and/or polyvinylidene fluoride (PVDF) and/or polytetrafluoroethylene (PTFE).

## Revendications

1. Courroie crantée (1, 10) pour l'entraînement d'un arbre à cames dans des moteurs à grande puissance, avec un corps de base en un mélange de caoutchouc vulcanisé, contenant un composant de caoutchouc ou des rognures de composant de caoutchouc ainsi que des ingrédients de mélange, dans laquelle le corps de base comprend une couche de recouvrement (2, 11) comme dos de la courroie, un porteur de résistance incorporé (3, 12) et une sous-structure (4, 13) avec un plan de transmission de force en forme de dents (7, 14), **caractérisée en ce que** le mélange de caoutchouc contient comme composant(s) de caoutchouc au moins un polymérisat mixte éthylène-propylène (EPM) ou au moins un polymérisat mixte éthylène-propylène-diène (EPDM) et en outre des fibres, dans laquelle les fibres sont composées d'alcool polyvinylique (PVA), d'aramide, de coton, de cellulose, de carbone ou de verre.

2. Courroie crantée selon la revendication 1, **caractérise en ce que** le EPM et le EPDM ne sont respectivement pas découpés.

3. Courroie crantée selon la revendication 1, **caractérisée en ce que** le EPM ou le EPDM forme des rognures avec au moins un autre composant du caoutchouc.

4. Courroie crantée selon l'une quelconque des revendications 1 à 3, **caractérisée en ce que** le mélange de caoutchouc est réticulé au peroxyde.

5. Courroie crantée selon l'une quelconque des revendications 1 à 4, **caractérisée en ce que** les fibres sont des fibres courtes.

6. Courroie crantée selon la revendication 5, **caractérisée en ce que** la longueur des fibres vaut de 1 à 5 mm.

7. Courroie crantée selon l'une quelconque des revendications 1 à 6, **caractérisée en ce que** la proportion de fibres dans le mélange vaut 5 à 20 phr.

8. Courroie crantée selon l'une quelconque des revendications 1 à 7, **caractérisée en ce que** les fibres sont préparées en vue de leur adhérence et/ou un agent adhésif est ajouté au mélange de caoutchouc.

9. Courroie crantée selon l'une quelconque des revendications 1 à 8, **caractérisée en ce que** le porteur de résistance (3, 12) se compose de deux ou plusieurs brins de traction, disposés l'un à côté de l'autre, qui forment une nappe de porteurs de résistance, qui est réalisée en une ou plusieurs couches.

10. Courroie crantée selon la revendication 9, **caractérisée en ce que** le brin de traction (3, 12) se compose de polyamide (PA), aramide, polyester, verre, carbone, polyétheréthercétone (PEEK) ou polyéthylène-2,6-naphtalate (PEN).

11. Courroie crantée selon l'une quelconque des revendications 1 à 10, **caractérisée en ce qu'**au moins la zone de transmission de force (7, 14) est munie d'un revêtement résistant à l'abrasion (8, 15).

12. Courroie crantée selon la revendication 11, **caractérisée en ce que** la zone de transmission de force (7, 14) et la couche de recouvrement (11) sont respectivement munies d'un revêtement résistant à l'abrasion (8, 15, 16).

13. Courroie crantée selon la revendication 11 ou 12, **caractérisée en ce que** le revêtement résistant à l'abrasion (8, 15, 16) comprend une couche textile.

14. Courroie crantée selon la revendication 13, **caractérisée en ce que** la couche textile (8, 15, 16) se compose d'un tissu, d'un tricot ou d'un tissu à mailles.

15. Courroie crantée selon la revendication 13 ou 14, **caractérisée en ce que** la couche textile (8, 15, 16) se compose de polyamide (PA) et/ou de polyester et/ou de coton et/ou d'aramide et/ou de polyétheréthercétone (PEEK) et/ou de polyimide (PI).

16. Courroie crantée selon l'une quelconque des revendications 13 à 15, **caractérisée en ce que** la couche textile (8, 15, 16) est en outre imprégnée et/ou est revêtue en surface avec une matière plastique apte à glisser et/ou résistante à l'huile.

17. Courroie crantée selon la revendication 16, **caractérisée en ce que** la matière plastique est une matière plastique fluorée et/ou une silicone et/ou un polyuréthane (PU).

18. Courroie crantée selon la revendication 17, **caractérisée en ce que** la matière plastique fluorée est le fluorure de polyvinyle (PVF) et/ou le fluorure de polyvinylidène (PVDF) et/ou le polytétrafluoroéthylène (PTFE).
